# EUROPEAN PATENT APPLICATION

(11) **EP 4 220 528 A1**
(43) Date of publication of application: **02.08.2023**
(21) Application number: 23153485.0
(22) Date of filing: 26.01.2023
(51) Int. Cl.: G06Q 40/04

(54) **PROCESSING APPARATUS, PROCESSING METHOD, AND PROGRAM**

(30) Priority: 31.01.2022 JP 2022012835
(71) Applicant: NEC Corporation, 108-8001 Tokyo (JP)
(72) Inventor: HORI, Masahiro, Tokyo, 108-8001 (JP); NISHIYAMA, Tomoyuki, Tokyo, 108-8001 (JP)
(74) Representative: Betten & Resch

(57) **Abstract**

To provide a technique for performing company evaluation with a nonconventional new approach, the present invention provides a processing apparatus 10 including a grouping unit 11 that groups a plurality of reference targets, based on a financial indicator for a target period, a technical indicator relating to a change on a temporal axis of a financial indicator for the target period and earlier, and an expert indicator generated by processing a financial indicator for the target period according to a predetermined rule.

## Description

This application is based upon and claims the benefit of priority from Japanese patent application No. 2022-12835, filed on January 31, 2022, the disclosure of which is incorporated herein in its entirety by reference.

### TECHNICAL FIELD

The present invention relates to a processing apparatus, a processing method, and a program.

### BACKGROUND ART

PTL 1 (International Publication No. WO2013/179884) discloses a technique for extracting a company being similar to a company to be evaluated, based on a correlation value for a company attribute and a correlation value for a financial indicator. The company attribute is the number of employees, a ratio of foreign employees, a ratio of men and women, a target market, the number of affiliated companies, a scale of subsidiaries, nationality, a form of commercial transactions, publicness, an infrastructure characteristic, and the like. The financial indicator is stock price increase rate stability, market capitalization increase rate stability, return on sales, return on equity (ROE) stability, return on invested capital (ROIC) stability, free cash flow (FCF) minimum value stability, and the like.

### DISCLOSURE OF THE INVENTION

The present invention addresses a problem of providing a technique for performing company evaluation with a non-conventional new approach.

According to the present invention, provided is a processing apparatus including
a grouping means for grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.

Further, according to the present invention, provided is a processing method including,
by a computer,
executing a grouping process of grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.

Further, according to the present invention, provided is a program causing a computer to function as
a grouping means for grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.

According to the present invention, a technique for performing company evaluation with a non-conventional new approach is achieved.

### BRIEF DESCRIPTION OF THE DRAWINGS

Fig. 1 is a diagram illustrating one example of a hardware configuration of a processing apparatus according to a first example embodiment.
Fig. 2 is a diagram illustrating one example of a function block diagram of the processing apparatus according to the first example embodiment.
Fig. 3 is a diagram schematically illustrating one example of information processed by the processing apparatus according to the first example embodiment.
Fig. 4 is a diagram describing grouping processing performed by the processing apparatus according to the first example embodiment.
Fig. 5 is a diagram schematically illustrating one example of information processed by the processing apparatus according to the first example embodiment.
Fig. 6 is a diagram illustrating one example of a function block diagram of a processing apparatus according to a second example embodiment.
Fig. 7 is a diagram schematically illustrating one example of information output by the processing apparatus according to the second example embodiment.
Fig. 8 is a diagram schematically illustrating one example of information output by the processing apparatus according to the second example embodiment.
Fig. 9 is a flowchart illustrating one example of a flow of processing of the processing apparatus according to the second example embodiment.

### DESCRIPTION OF EMBODIMENTS

Hereinafter, example embodiments of the present invention will be described by using drawings. Note that, in every drawing, a similar component is given a similar sign, and description thereof is omitted as appropriate.

### <First Example Embodiment>

### "Overview"

A processing apparatus according to a present example embodiment handles data on one fiscal year of one company as one reference target, and groups a plurality of reference targets with similar contents together among the reference targets that are acquired from data for a plurality of fiscal years of a plurality of companies. In addition, the processing apparatus according to the present example embodiment uses, in the grouping, a financial indicator for a target fiscal year, a technical indicator relating to a change on a temporal axis of a financial indicator for the target fiscal year and earlier, and an expert indicator generated by processing a financial indicator for the target fiscal year according to a predetermined rule.

### "Hardware Configuration"

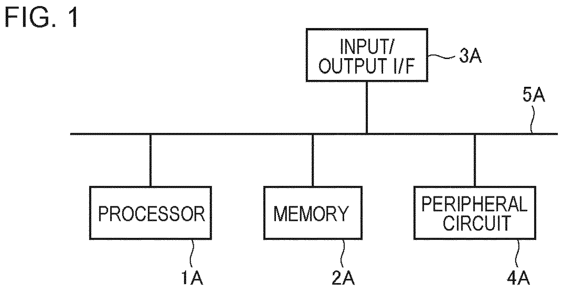

Next, one example of a hardware configuration of the processing apparatus will be described. Fig. 1 is a diagram illustrating a hardware configuration example of the processing apparatus. Each function unit included in the processing apparatus is achieved by any combination of hardware and software, mainly including a central processing unit (CPU) of any computer, a memory, a program to be loaded in a memory, a storage unit (in which a program downloaded from a storage medium such as a compact disc (CD), a server on the Internet, or the like can be stored as well as a program stored in advance in a stage of shipping an apparatus) such as a hard disk for storing the program, and an interface for network connection. In addition, it should be understood by a person skilled in the art that there are a variety of modified examples of a method or an apparatus for achieving the same.

As illustrated in Fig. 1, the processing apparatus includes a processor 1A, a memory 2A, an input/output interface 3A, a peripheral circuit 4A, and a bus 5A. The peripheral circuit 4A includes various modules. The processing apparatus may not include the peripheral circuit 4A. Note that, the processing apparatus may be configured by a plurality of physically and/or logically separated apparatuses, or may be configured by one physically and logically unified apparatus. When the processing apparatus is configured by a plurality of physically and/or logically separated apparatuses, each of the plurality of apparatuses can include the aforementioned hardware configuration.

The bus 5A is a data transmission path through which the processor 1A, the memory 2A, the peripheral circuit 4A, and the input/output interface 3A transmit and receive data to and from one another. The processor 1A is an arithmetic processing apparatus such as, for example, a CPU or a graphics processing unit (GPU). The memory 2A is a memory such as, for example, a random access memory (RAM) or a read only memory (ROM). The input/output interface 3A includes an interface for acquiring information from an input apparatus, an external apparatus, an external server, an external sensor, and the like, an interface for outputting information to an output apparatus, an external apparatus, an external server, and the like, and the like. The input apparatus is, for example, a keyboard, a mouse, a microphone, and the like. The output apparatus is, for example, a display, a speaker, a printer, a mailer, and the like. The processor 1A can give an instruction to each module to perform an arithmetic operation, based on an arithmetic operation result thereof.

### "Function Configuration"

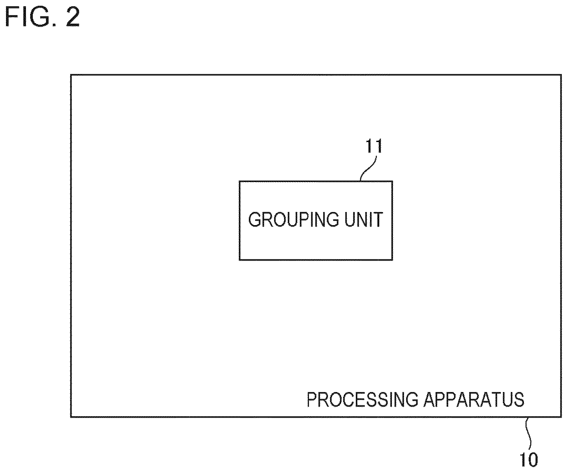

Next, one example of a function configuration of the processing apparatus will be described. Fig. 2 illustrates one example of a function block diagram of a processing apparatus 10. As illustrated, the processing apparatus 10 includes a grouping unit 11.

The grouping unit 11 includes a function of grouping a plurality of reference targets.

The "reference target" is data on one fiscal year of one company. For example, data on fiscal year 2020 of ∘∘∘ Corporation are one reference target, data on fiscal year 2019 of ∘∘∘ Corporation are another reference target, and data on fiscal year 2020 of × × × Corporation are another reference target.

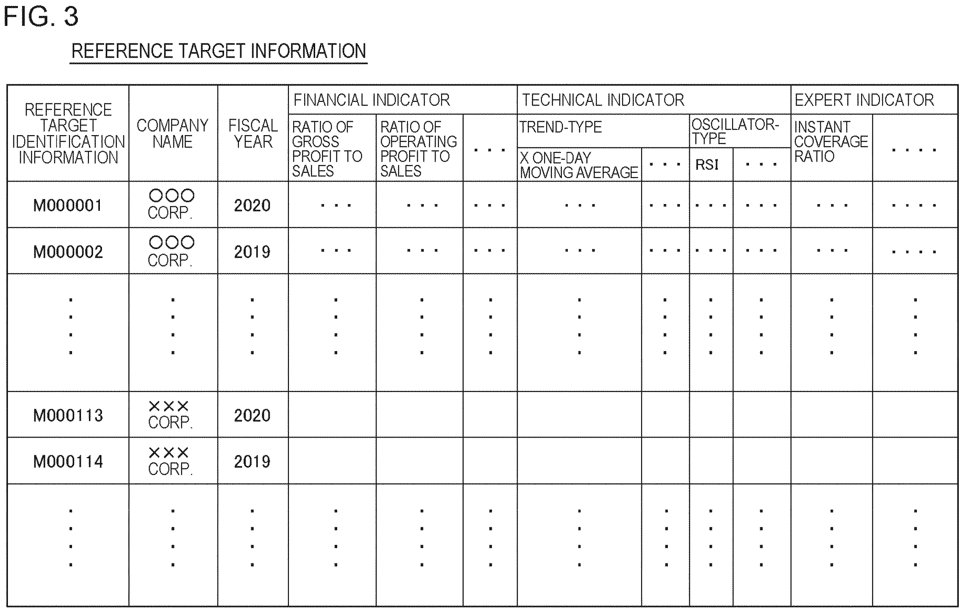

Fig. 3 schematically illustrates one example of information processed by the grouping unit 11. Illustrated reference target information includes information on a plurality of reference targets. Each piece of the reference target information includes reference target identification information, a company name, a fiscal year, and data.

The "reference target identification information" is information mutually identifying a plurality of reference targets.

The "company name" is a name of a company pertaining to each reference target.

The "fiscal year" is a fiscal year pertaining to each reference target.

The "data" are data on each reference target. As illustrated, the data on each reference target include a financial indicator, a technical indicator, and an expert indicator.

The "financial indicator" is an indicator indicating a financial state for each fiscal year (target period) of each company. The financial indicator of a reference target identified by reference target identification information "M000001" in Fig. 3 is a financial indicator for fiscal year 2020 of ∘∘∘ Corporation. The financial indicator can include any widely-used indicator. For example, the financial indicator can include at least one of a ratio of ordinary profit to sales, return on equity, a ratio of gross profit to sales, a ratio of operating profit to sales, a selling, general and administrative ratio, a ratio of ordinary profit to total capital, return on total capital, a turnover ratio of total capital, a current ratio, an equity ratio, a quick ratio, a debt ratio, a fixed ratio, a fixed long-term conformity ratio, an operating cash flow, an investment cash flow, a financial cash flow, labor productivity, capital productivity, labor share, a value-added to sales ratio, a turnover ratio of tangible fixed assets, a growth rate of operating profit, a growth rate of total capital, a sales growth rate, an equity growth rate, a ratio of research and development cost to sales, and an employee increase rate.

The "technical indicator" relates to a change on a temporal axis of a financial indicator for each fiscal year (target period) and earlier of each company. The technical indicator of a reference target identified by reference target identification information "M000001" in Fig. 3 relates to a change on a temporal axis of a financial indicator for fiscal year 2020 and earlier of ∘∘∘ Corporation. Although the number of years of data to be referred in the technical indicator varies, the technical indicator is preferably data relating to a change on a temporal axis of a financial indicator for four years or more including each fiscal year and earlier. By doing so, company evaluation with a non-conventional approach is achieved.

The technical indicator includes, for example, at least one of a trend-type indicator and an oscillator-type indicator.

The trend-type indicator is an indicator indicating a stock market flow, and can include any widely-used indicator. For example, the trend-type indicator can include at least one of a simple moving average, an exponential moving average, Ichimoku kinko hyo, a Bollinger band, a zigzag chart, a linear regression trend, an HL band, an envelope, a Keltner channel, a chaos alligator, a candlestick chart, a three line break chart, a Kagi chart, balance of power, Aroon, Heikin Ashi, and a point and figure.

The oscillator-type indicator is an indicator indicating an overbought or oversold stock, and can include any widely-used indicator. For example, the oscillator-type indicator can include at least one of
stochastics, moving average convergence divergence (MACD), a relative strength index (RSI), a momentum, a directional movement index, a divergence ratio, a divergence price/average, Tom DeMark's range expansion index, an average directional movement index, historical volatility, William's %R, a psychological line, a Coppock indicator, a rank correlation index, a rate of change, a moving average oscillator, an ultimate oscillator, Aroon up/down, an Aroon oscillator, a money flow index, a product channel index, a volume ratio, a Shinohara intensity ratio, performance, and a counter clock curve.

The "expert indicator" is an indicator not included in the financial indicator and the technical indicator described above, and is an indicator generated by processing a financial indicator for each fiscal year (target period) of each company according to a predetermined rule. The expert indicator of a reference target identified by reference target identification information "M000001" in Fig. 3 is an indicator generated by processing the financial indicator for fiscal year 2020 of ∘∘∘ Corporation according to a predetermined rule. The indicator may be a widely-known indicator, or may be a newly created indicator. An indicator or the like uniquely created and used by an expert in company evaluation may be used as the expert indicator. For example, the expert indicator can include at least one of an interest coverage ratio, unbalance between sales and accounts receivable (whether a ratio of change rate in trade receivables to change rate in sales is increasing for two consecutive terms), and an interest expense coefficient (whether a state of borrowing at an interest rate of which interest expense itself is high is continuing for a predetermined period).

The grouping unit 11 groups a plurality of reference targets by using a technique of clustering (machine learning), based on a degree of similarity of the financial indicator, the technical indicator, and the expert indicator described above. Note that, the grouping unit 11 may perform grouping by using an approach of ensemble learning. That is, the grouping unit 11 may perform grouping by using each of a plurality of types of models, and employ a result of taking a majority vote on a result of grouping by the plurality of types of models. The clustering and the ensemble learning are widely-known techniques, and thus, description thereof is omitted herein.

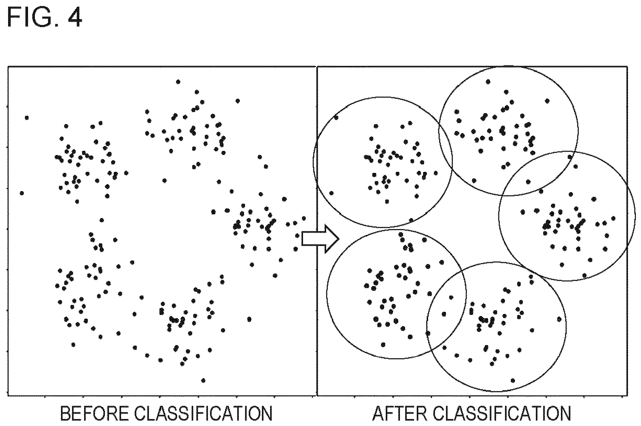

By grouping processing performed by the grouping unit 11, a plurality of reference targets are grouped, as illustrated in Fig. 4. One dot in the figure pertains to one reference target.

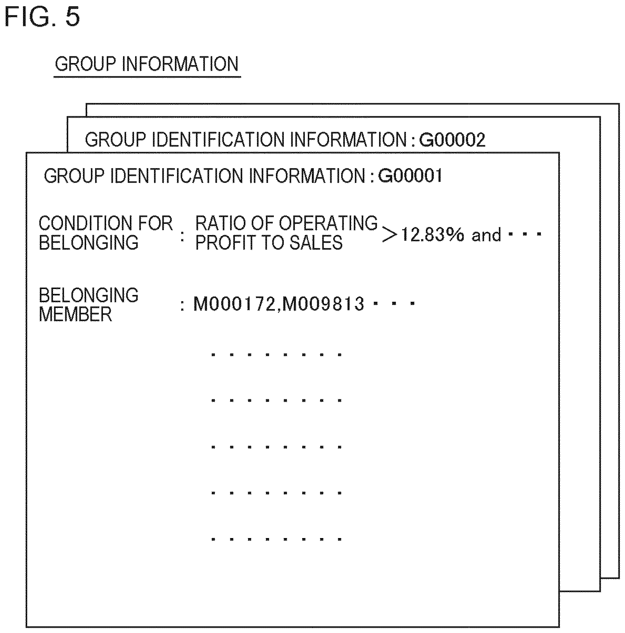

Further, by grouping processing performed by the grouping unit 11, group information relating to each of a plurality of groups as illustrated in Fig. 5 is generated, and is stored in a storage apparatus of the processing apparatus 10. The group information indicates a condition for belonging being a condition for belonging to each group and a belonging member being a member belonging to each group. The condition for belonging is expressed by using the financial indicator, the technical indicator, and the expert indicator. The condition for belonging and the belonging member are both information acquired as a result of the clustering described above.

### "Advantageous Effect"

The processing apparatus 10 according to the present example embodiment groups data on a company, based on the financial indicator, the technical indicator, and the expert indicator described above. Grouping data on a company, based on such a plurality of characteristic indicators, enables acquisition of a result of desired grouping. Then, performing company evaluation, based on a result of the grouping, enables company evaluation with a non-conventional approach.

Further, the processing apparatus 10 according to the present example embodiment can perform grouping by processing data on each of a plurality of companies in each of a plurality of fiscal years as one reference target. That is, the processing apparatus 10 performs grouping by handling data on one company divided for each fiscal year as a plurality of reference targets, rather than performs grouping by handling data on one company as one reference target. Then, performing company evaluation, based on a result of the grouping, enables company evaluation with a non-conventional approach.

Further, the processing apparatus 10 according to the present example embodiment can perform grouping by using a technical indicator relating to a change on a temporal axis of a financial indicator for four years or more in total of a target fiscal year and earlier. By using such a technical indicator relating to a long period compared to conventional ones, company evaluation with a non-conventional approach is achieved.

### <Second Example Embodiment>

A processing apparatus 10 according to a present example embodiment includes a function of outputting information to be a material for evaluating an evaluation target, by using a result of grouping described in the first example embodiment. Hereinafter, description will be given in detail.

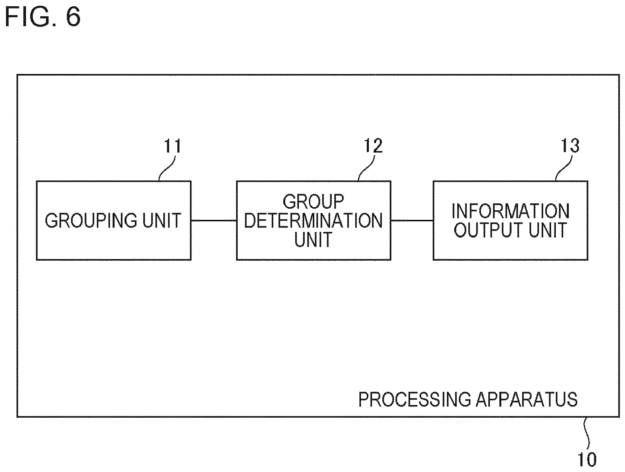

Fig. 6 illustrates one example of a function block diagram of the processing apparatus 10 according to the present example embodiment. As illustrated, the processing apparatus 10 includes a grouping unit 11, a group determination unit 12, and an information output unit 13.

The group determination unit 12 determines a group to which an evaluation target belongs, from among groups generated by grouping performed by the grouping unit 11.

The "evaluation target" is data on one fiscal year of one company. For example, data on fiscal year 2021 of ∘×∘ Corporation are one evaluation target.

The group determination unit 12 determines a group to which an evaluation target belongs, based on a financial indicator for an evaluation target period (target fiscal year) of the evaluation target, a technical indicator relating to a change on a temporal axis of a financial indicator for the evaluation target period and earlier, and an expert indicator generated by processing a financial indicator for the evaluation target period according to a predetermined rule. For example, the group determination unit 12 may determine a group to which an evaluation target belongs (a group to which an evaluation target satisfies a condition for belonging), by judging whether an evaluation target satisfies a condition for belonging (see Fig. 5) to each group.

The information output unit 13 outputs information relating to an evaluation target, that is, information to be a material for evaluating an evaluation target. The information output unit 13 may output information via an output apparatus such as a display, a projection apparatus, a printer, and a mailer, or may transmit information toward an external apparatus.

The information output unit 13 outputs, as information relating to an evaluation target, information relating to a group (a group to which an evaluation target belongs) determined by the group determination unit 12.

For example, the information output unit 13 may output information indicating a reference target belonging to a determined group. The reference target belonging to a determined group is a target of which a state of a financial indicator, a technical indicator, and an expert indicator is determined as similar to an evaluation target. Providing such a reference target means providing a reference target of which a state of a financial indicator, a technical indicator, and an expert indicator became a state similar to an evaluation target in past. For example, a user can predict a future perspective of an evaluation target by referring to a state (a state of a financial indicator, a technical indicator, and an expert indicator) of a target fiscal year or later of a provided reference target, a measure or a result thereof taken by companies in the target fiscal year or later, and the like, and can evaluate the evaluation target, based on a result of prediction.

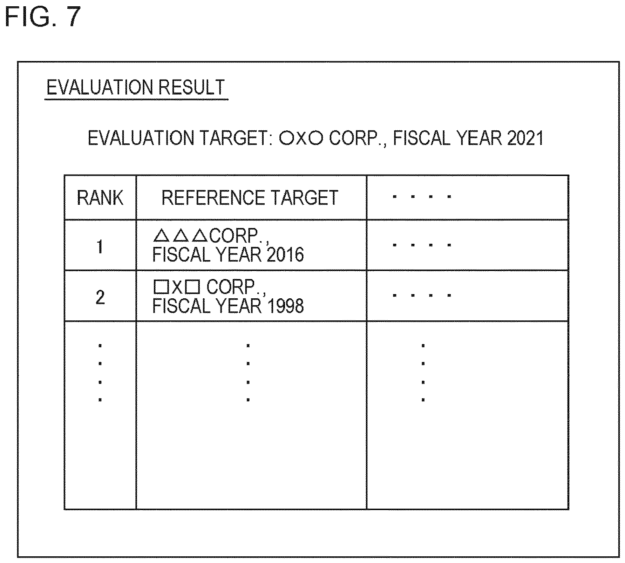

Besides the above, the information output unit 13 may output information displaying a plurality of reference targets belonging to a determined group in a ranking form. Fig. 7 schematically illustrates one example of the information. The illustrated information displays a plurality of reference targets belonging to a group to which an evaluation target (data on fiscal year 2021 of ∘×∘ Corporation) belongs in order of similarity to the evaluation target.

Besides the above, the information output unit 13 may generate and output, based on data on a target fiscal year or later of a plurality of reference targets belonging to a determined group, information indicating a tendency of data on the target fiscal year or later of the group. The data to be a target for computation of a tendency may be a financial indicator, may be a technical indicator, may be an expert indicator, or may be other data such as sales or profit. For example, the information output unit 13 may compute an average of data on a target fiscal year or later of a plurality of reference targets as data indicating a tendency of a determined group.

Besides the above, the information output unit 13 may output a condition for belonging for belonging to a determined group described above.

Besides the above, the information output unit 13 may predict, based on data on an evaluation target and information indicating a tendency of data on a target fiscal year or later of a determined group described above, a future trend of the data on the evaluation target, and output a result of prediction. The data to be a target for prediction of a trend may be a financial indicator, may be a technical indicator, may be an expert indicator, or may be other data such as sales or profit.

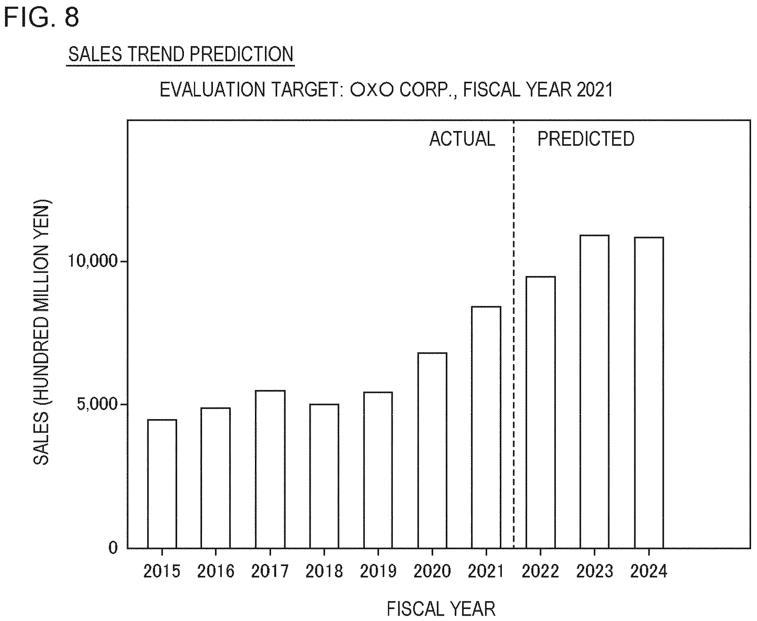

Fig. 8 schematically illustrates one example of the information. The illustrated information indicates a trend of sales of an evaluation target (data on fiscal year 2021 of ∘×∘ Corporation). Values from fiscal year 2015 to fiscal year 2021 are actual values, and values from fiscal year 2022 to fiscal year 2024 are predicted values. The predicted values when a value starting from an actual value of fiscal year 2021 changes with a tendency of data after a target period of a determined group described above are indicated.

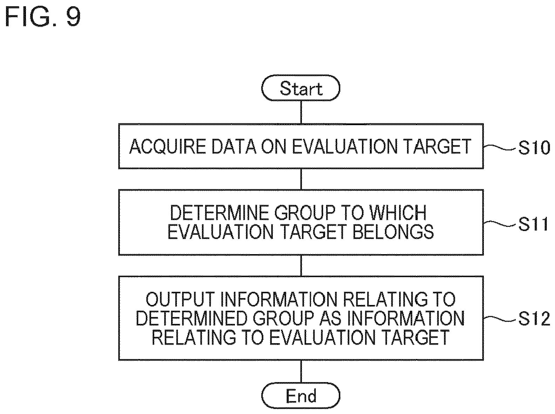

Next, one example of a flow of processing of the processing apparatus 10 will be described by using a flowchart in Fig. 9.

First, the processing apparatus 10 acquires data (a financial indicator, a technical indicator, and an expert indicator) on an evaluation target (S10). Next, the processing apparatus 10 determines a group to which the evaluation target belongs, based on the financial indicator, the technical indicator, and the expert indicator (S11). Then, the processing apparatus 10 outputs information relating to the group (the group to which the evaluation target belongs) determined in S11, as information relating to the evaluation target, that is, information to be a material for evaluating the evaluation target (S12).

Other configurations of the processing apparatus 10 according to the present example embodiment are similar to those of the first example embodiment.

The processing apparatus 10 according to the present example embodiment achieves an advantageous effect similar to the first example embodiment. Further, the processing apparatus 10 according to the present example embodiment can output information to be a material for evaluating an evaluation target, specifically, information relating to a reference target in a state similar to an evaluation target. Based on such information, a user can perform company evaluation with a non-conventional approach.

### "Modified Example"

Herein, a modified example applicable to the first and second example embodiments will be described. In the example embodiments described above, data on one fiscal year of one company are one reference target and one evaluation target. That is, one fiscal year is a target period. As a modified example, a quarter of a year or a half of a year may be a target period. That is, data on a quarter of a year of one company may be one reference target and one evaluation target, or data on a half of a year of one company may be one reference target and one evaluation target. The modified example also achieves an advantageous effect similar to the example embodiments described above.

While the example embodiments of the present invention have been described above with reference to the drawings, the example embodiments are exemplifications of the present invention, and various configurations other than the above can be employed. The configurations of the example embodiments described above may be combined with each other, or a part of the configurations may be replaced with another configuration. Further, various modifications may be applied to the configurations of the example embodiments described above, as long as such modifications do not depart from the gist. Further, the configurations and processing disclosed in the example embodiments described above and the modified examples may be combined with each other.

Note that, "acquisition" in the present description includes at least one of "fetching (active acquisition), by an own apparatus, data stored in another apparatus or storage medium", based on a user input or based on an instruction of a program, for example, requesting or inquiring another apparatus to receive data, accessing another apparatus or storage medium to read out data therefrom, or the like, "inputting (passive acquisition), to an own apparatus, data output from another apparatus", based on a user input or based on an instruction of a program, for example, receiving delivered (transmitted, push-notified, or the like) data, selectively acquiring from received data or information, and "generating new data by editing data (such as conversion to a text, sorting of data, extraction of some data, or change of a file format) or the like, and acquiring the new data".

The aforementioned example embodiments may also be described in part or in whole as the following supplementary notes, but are not limited thereto.
1. A processing apparatus including
   a grouping means for grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.
2. The processing apparatus according to supplementary note 1, wherein
   the grouping means performs the grouping by processing data on each of a plurality of companies in each of a plurality of the target periods as the one reference target.
3. The processing apparatus according to supplementary note 1 or 2, wherein
   the technical indicator includes at least one of a trend-type indicator and an oscillator-type indicator.
4. The processing apparatus according to any one of supplementary notes 1 to 3, wherein
   the grouping means performs the grouping by using an approach of ensemble learning.
5. The processing apparatus according to any one of supplementary notes 1 to 4, wherein
   the technical indicator relates to a change on a temporal axis of a financial indicator for four years or more in total of the target period and earlier.
6. The processing apparatus according to any one of supplementary notes 1 to 5, further including:
   a group determination means for determining a group to which an evaluation target for an evaluation target period belongs, based on a financial indicator for the evaluation target period of the evaluation target, the technical indicator relating to a change on a temporal axis of a financial indicator for the evaluation target period and earlier, and the expert indicator generated by processing a financial indicator for the evaluation target period according to the predetermined rule; and
   an information output means for outputting information relating to the determined group as information relating to the evaluation target.
7. The processing apparatus according to supplementary note 6, wherein
   the information output means outputs information indicating a tendency of a financial indicator for the evaluation target period or later of the evaluation target being predicted based on a tendency of a financial indicator for the target period or later of the reference target belonging to the determined group.
8. The processing apparatus according to supplementary note 6 or 7, wherein
   the information output means outputs information indicating the reference target belonging to the determined group.
9. The processing apparatus according to supplementary note 8, wherein
   the information output means outputs information displaying a plurality of the reference targets belonging to the determined group in a ranking form.
10. The processing apparatus according to any one of supplementary notes 6 to 9, wherein
   the information output means outputs a condition for belonging to the determined group being expressed by using a financial indicator, the technical indicator, and the expert indicator.
11. A processing method including,
   by a computer,
   executing a grouping process of grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.
12. A program causing a computer to function as
   a grouping means for grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.

- 10: Processing apparatus
- 11: Grouping unit
- 12: Group determination unit
- 13: Information output unit
- 1A: Processor
- 2A: Memory
- 3A: Input/output I/F
- 4A: Peripheral circuit
- 5A: Bus

## Claims

1. A processing apparatus comprising
grouping means for grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.

2. The processing apparatus according to claim 1, wherein
the grouping means performs the grouping by processing data on each of a plurality of companies in each of a plurality of the target periods as the one reference target.

3. The processing apparatus according to claim 1 or 2, wherein
the technical indicator includes at least one of a trend-type indicator and an oscillator-type indicator.

4. The processing apparatus according to any one of claims 1 to 3, wherein
the grouping means performs the grouping by using an approach of ensemble learning.

5. The processing apparatus according to any one of claims 1 to 4, wherein
the technical indicator relates to a change on a temporal axis of a financial indicator for four years or more in total of the target period and earlier.

6. The processing apparatus according to any one of claims 1 to 5, further comprising:
group determination means for determining a group to which an evaluation target for an evaluation target period belongs, based on a financial indicator for the evaluation target period of the evaluation target, the technical indicator relating to a change on a temporal axis of a financial indicator for the evaluation target period and earlier, and the expert indicator generated by processing a financial indicator for the evaluation target period according to the predetermined rule; and
information output means for outputting information relating to the determined group as information relating to the evaluation target.

7. The processing apparatus according to claim 6, wherein
the information output means outputs information indicating a tendency of a financial indicator for the evaluation target period or later of the evaluation target being predicted based on a tendency of a financial indicator for the target period or later of the reference target belonging to the determined group.

8. The processing apparatus according to claim 6 or 7, wherein
the information output means outputs information indicating the reference target belonging to the determined group.

9. The processing apparatus according to claim 8, wherein
the information output means outputs information displaying a plurality of the reference targets belonging to the determined group in a ranking form.

10. The processing apparatus according to any one of claims 6 to 9, wherein
the information output means outputs a condition for belonging to the determined group being expressed by using a financial indicator, the technical indicator, and the expert indicator.

11. A processing method comprising,
by a computer,
executing a grouping process of grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.

12. A program causing a computer to function as
grouping means for grouping a plurality of reference targets, based on a financial indicator for a target period, a technical indicator relating to a change on a temporal axis of a financial indicator for the target period and earlier, and an expert indicator generated by processing a financial indicator for the target period according to a predetermined rule.
